# EUROPEAN PATENT APPLICATION

(11) **EP 3 733 248 A1**
(43) Date of publication of application: **04.11.2020**
(21) Application number: 19766536.7
(22) Date of filing: 15.03.2019
(51) Int. Cl.: A63B 21/06, A63B 22/20, F16C 29/04

(54) **EXERCISE EQUIPMENT FOR WEIGHT TRAINING**

(30) Priority: 16.03.2018 KR 20180031182; 05.06.2018 KR 20180064655
(71) Applicant: Dong-A Sports Co., Ltd., Gwangju-si, Gyeonggi-do 12815 (KR)
(72) Inventor: SEO, Jung Geun, Anyang-si, Gyeonggi-do 13968 (KR)
(74) Representative: Arth, Hans-Lothar
(86) International application number: PCT/KR2019/003013
(87) International publication number: WO 2019/177412

(57) **Abstract**

Disclosed is exercise equipment for weight training, in which a first guide rod, a second guide rod, a third guide rod, and a fourth guide rod are respectively fitted into a first bearing body, a second bearing body, a third bearing body, and a fourth bearing body, such that the first bearing body, the second bearing body, the third bearing body, and the fourth bearing body slide up and down along the first guide rod, the second guide rod, the third guide rod, and the fourth guide rod, respectively, as weights are lifted up, and that a plurality of first bearings and second bearings provided at each of the first bearing body, the second bearing body, the third bearing body, and the fourth bearing body are arranged so as to crisscross each other to closely contact and support the outer surfaces of the first guide rod, the second guide rod, the third guide rod, and the fourth guide rod concurrently, thereby dispersing the load of the lifted weights, which facilitate various weight training movements by using a weight training rod, a horizontal bar, and equipment for parallel exercises.

## Description

### Technical Field

The present disclosure relates to exercise equipment for weight training, and more specifically, to exercise equipment for weight training that facilitates the operation of lifting a weight by improving the response force to the load applied by the weight in the process of repeatedly lifting the heavy weight and allows a variety of exercises to be performed with one training machine.

### Background Art

In general, exercise equipment for weight training is divided into an exercise machine for upper body training and an exercise machine for lower body training. These exercise machines have a weight for appropriately adjusting the total weight to suit a user and thus cause muscular movement of the lower body to be made against the weight.

For example, the lower body exercise machine is configured to strengthen the calf and thigh muscles of a user's lower body, and the upper body exercise machine is configured to strengthen the user's back and shoulder muscles or the muscles of the user's arms.

Such exercise equipment for weight training includes a support frame vertically installed on the ground, a guide rod perpendicularly connected to the support frame, a vertical movement guide connected to the guide rod with a bearing, a barbell rod connected to the vertical movement guide, and a weight connected to the vertical movement guide and lifted by an operation of lifting the exercise bar.

Among the exercises using such conventional exercise equipment for weight training, the deadlift exercise involves repeating the operation of slowly lifting and lowering a barbell by the user with the user's legs stretched narrower than the shoulder width and the user's chest and waist positioned straightened.

In other words, after a user selects a desired weight and positions the barbell rod on the back of the neck, the user holds the barbell rod such that the barbell rod is placed on the user's shoulders, and performs workout by repeatedly sitting down and rising up.

When the user lifts the weight by the movement of lifting the barbell rod, the bearing allows the vertical movement guide connected to the barbell rod to easily move up and down along the guide rod in a sliding manner. The user is allowed to workout by easily lifting the weight as described above.

However, the bearing of the conventional exercise equipment for weight training lowers response force to the load of the weight transmitted to the vertical movement guide during the process of lifting the barbell rod, thereby obstructing the user from easily lifting the weight by lifting the barbell rod.

In addition, the bearing of the conventional exercise equipment for weight training is not securely connected to the vertical movement guide. As a result, the bearing may be separated from the guide rod while the vertical movement guide is repeatedly lifted up and lowered.

As a conventional technology, Korean Patent No. 10-0776573 discloses an exercise mechanism bearing including a rotating shaft coupled to or supported by a rotating body of the exercise mechanism and provided with a screw part symmetrically formed on left and right sides to fix a fixing means to left and right outer circumferences, a body having a through-hole formed in an inner circumference thereof to allow the rotating shaft to be arranged therethrough, an engagement step formed at the center of the inner circumference, and a sealing step formed at opposite side ends of the inner circumference, a pair of bearings allowing the rotating shaft to pass therethrough and coupled to the through-hole of the body to support a vertical load or an axial load applied to the rotating shaft while allowing rotation of the rotating shaft, a fixing means provided with a screw hole formed in an inner circumference thereof and fastened to the left and right screw parts of the rotating shaft to closely fix the bearings to the engagement step of the body, and a sealing means penetrated by the rotating shaft to seal the through-hole of the body and the outer circumference of the rotating shaft.

In the conventional technology described above, the fixing means including a fixing part and an anti-loosening member is installed to ensure the uprightness of the bearings and allow the rotating shaft to rotate smoothly without shaking. However, the conventional technology is configured to facilitate rotation with respect to the rotating body, and accordingly it is difficult to apply the conventional technology to the bearing of the exercise equipment for weight training configured to vertically move up and down along a guide rod in a sliding manner.

### Disclosure

### Technical Problem

It is an object of the present disclosure to provide exercise equipment for weight training that allows a variety of exercises to be performed with a single piece thereof and facilitates lifting of a weight.

### Technical Solution

In accordance with one aspect of the present disclosure, provided is exercise equipment for weight training including a first support frame and a second support frame positioned on oppositesides to face each other, an upper end connection frame configured to connect upper ends of the first support frame and the second support frame, a lower end connection frame configured to connect lower ends of the first support frame and the second support frame, a first weight arranged at a lower portion of the first support frame, and a second weight arranged at a lower portion of the second support frame, a first guide rod and a second guide rod arranged in a vertical longitudinal direction of the first support frame to penetrate oppositesides of an upper end of the first weight, upper and lower ends of the first guide rod and the second guide rod being fixed to upper and lower ends of the first support frame, respectively, a third guide rod and a fourth guide rod arranged in a vertical longitudinal direction of the second support frame to penetrate oppositesides of an upper end of the second weight, upper and lower ends of the third guide rod and the fourth guide rod being fixed to upper and lower ends of the second support frame, respectively, a first bearing body fitted onto the first guide rod to slide up and down along the first guide rod, the first bearing body having a first hinge groove, a second bearing body fitted onto the second guide rod to slide up and down along the second guide rod, a third bearing body fitted onto the third guide rod to slide up and down along the third guide rod, the third bearing body having a second hinge groove, a fourth bearing body fitted onto the fourth guide rod to slide up and down along the fourth guide rod, a weight training rod having one side connected to the first bearing body by fitting a first hinge protrusion of a first hinge fixing member arranged on the one side into the first hinge groove of the first bearing body, and an opposite side connected to the second bearing body by fitting a second hinge protrusion of a second hinge fixing member arranged on the opposite side into the second hinge groove of the third bearing body, a first weight lifting member having a lower end fixed to a center of the upper end of the first weight and including a plurality of first catching grooves arranged in a vertical longitudinal direction to face the first hinge groove of the first bearing body, and a first connection piece connected to the second bearing body, a second weight lifting member having a lower end fixed to a center of the upper end of the second weight and including a plurality of first catching grooves arranged in the vertical longitudinal direction to face the second hinge groove of the third bearing body, and a second connection piece connected to the fourth bearing body, a first wire having one side connected to the first bearing body and an opposite side connected to a first counterweight, a second wire having one side connected to the third bearing body and an opposite side connected to a second counterweight, a first roller bearing configured to guide the first wire, a second roller bearing configured to guide the second wire, a first auxiliary frame configured to connect the first support frame and the upper end connection frame, a second auxiliary frame configured to connect the second support frame and the upper end connection frame, a first chin-up exercise rod having one side fixed to the first auxiliary frame, a second chin-up exercise rod arranged to face the first chin-up exercise rod and having one side fixed to the auxiliary frame, a third chin-up exercise rod having one side fixed to the first auxiliary frame and positioned close to the upper end connection frame, a fourth chin-up exercise rod having one side fixed to the second auxiliary frame and positioned close to the upper end connection frame to face the third chin-up exercise rod, a first parallel exercise member provided on a front surface of the first support frame, and a second parallel exercise member provided on a front surface of the second support frame.

### Advantageous Effects

According to the present disclosure, a first bearing body, a second bearing body, a third bearing body, and a fourth bearing body are fitted onto a first guide rod, a second guide rod, a third guide rod, and a fourth guide rod, respectively. Thus, the first bearing body, the second bearing body, the third bearing body, and the fourth bearing body are vertically slid along the first guide rod, the second guide rod, the third guide rod, and the fourth guide rod by lifting of a weight. In addition, as a plurality of first and second bearings provided in each of the first bearing body, the second bearing body, the third bearing body, and the fourth bearing body, are positioned in a cross shape with respect to each other. Accordingly, the bearings may closely contact and support the outer surfaces of the first guide rod, the second guide rod, the third guide rod, and the fourth guide rod at the same time. Thereby, the load of the lifted weight may be evenly distributed, and various types weight training may be performed using a weight training rod, an chin-up exercise rod, and a parallel motion tool.

### Description of Drawings

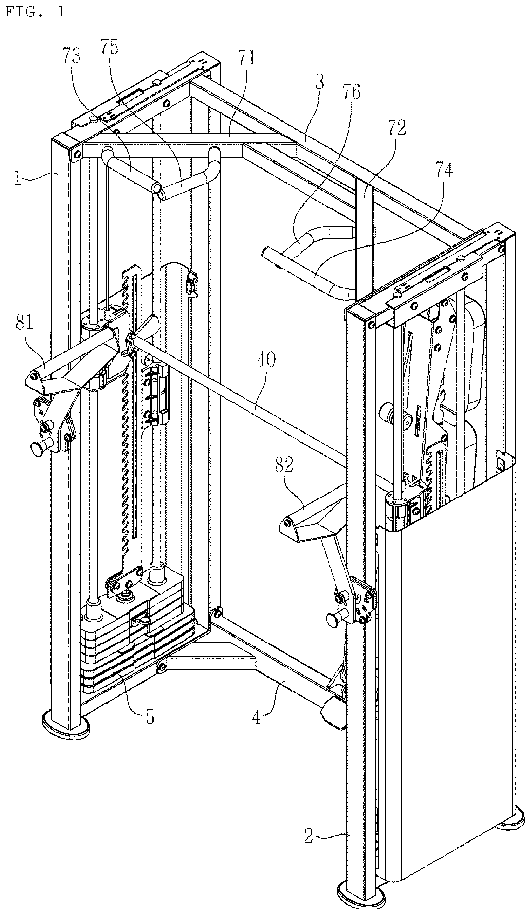

FIG. 1 is a perspective view showing exercise equipment for weight training according to the present disclosure.

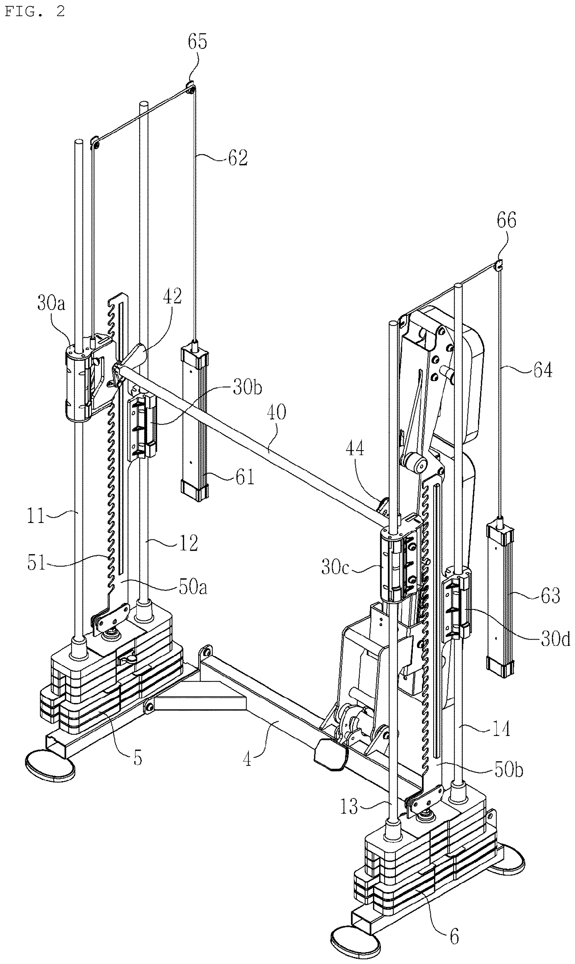

FIG. 2 is a perspective view showing main components of the exercise equipment for weight training according to the present disclosure, seen from one side.

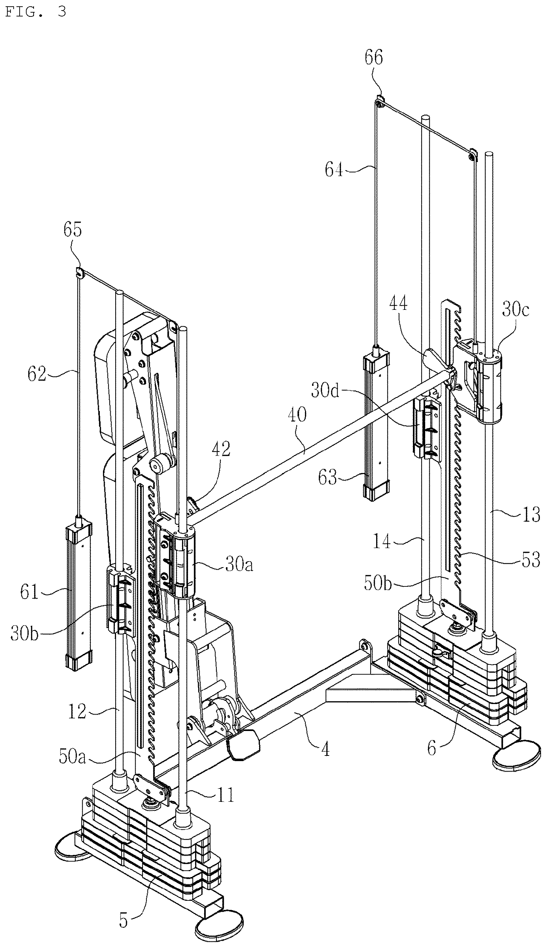

FIG. 3 is a perspective view showing main components of the exercise equipment for weight training according to the present disclosure, seen from the other side.

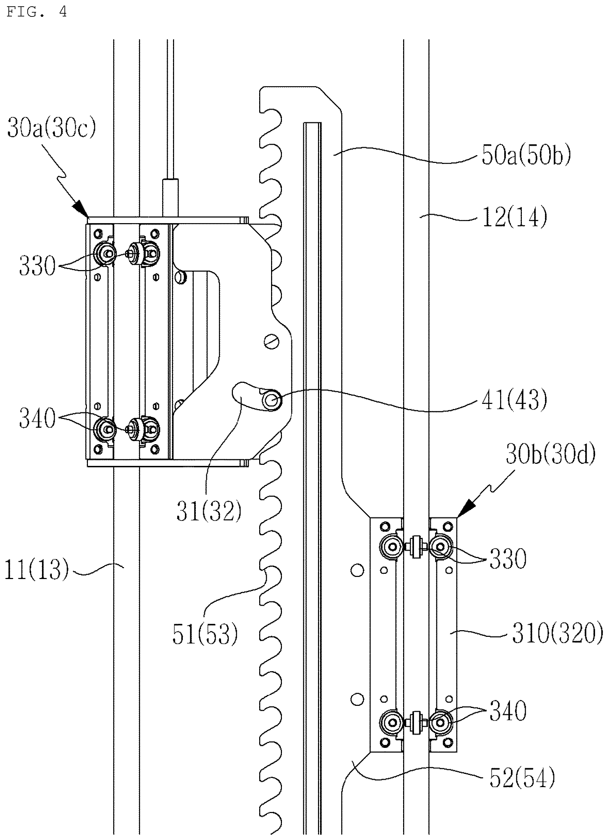

FIG. 4 is a configuration view illustrating connection of a bearing body of the exercise equipment for weight training according to the present disclosure.

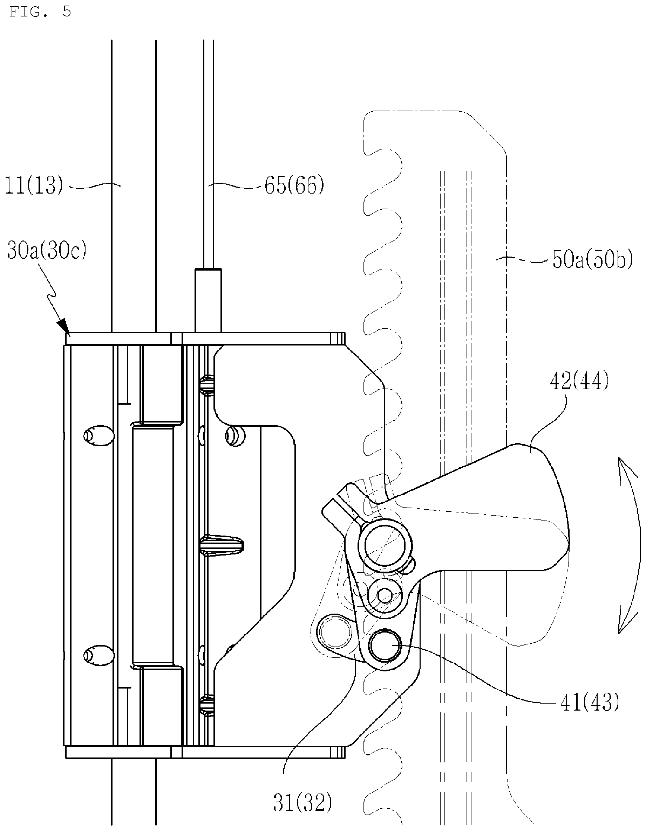

FIG. 5 is a configuration view illustrating connection of a weight training rod of the exercise equipment for weight training according to the present disclosure.

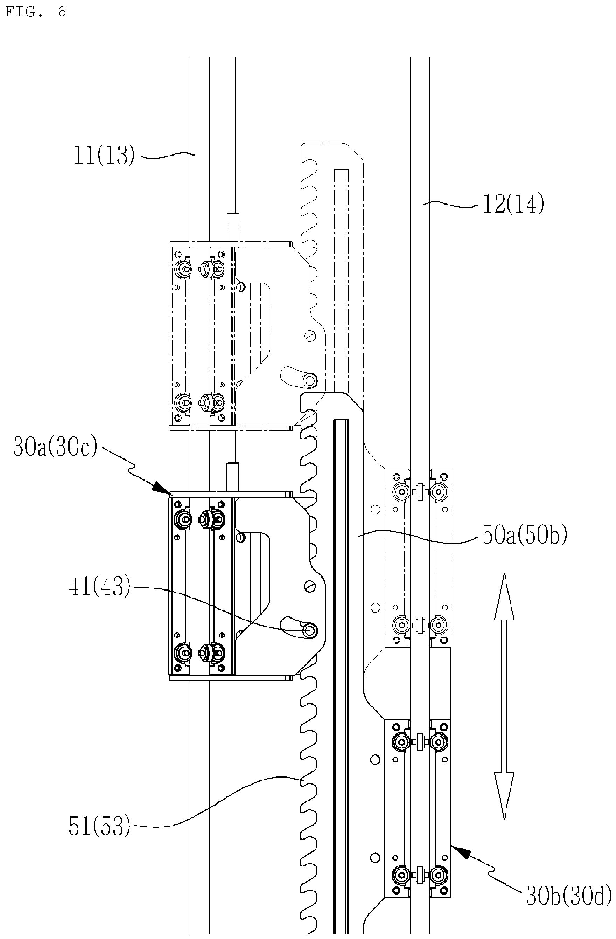

FIG. 6 is a configuration view illustrating vertical movement of the bearing body of the exercise equipment for weight training according to the present disclosure.

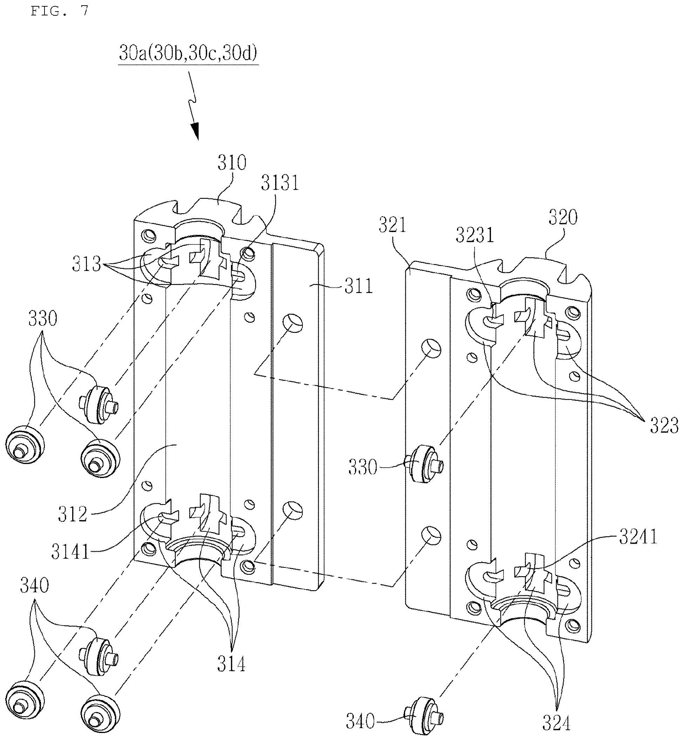

FIG. 7 is an exploded perspective view showing the bearing body of the exercise equipment for weight training according to the present disclosure.

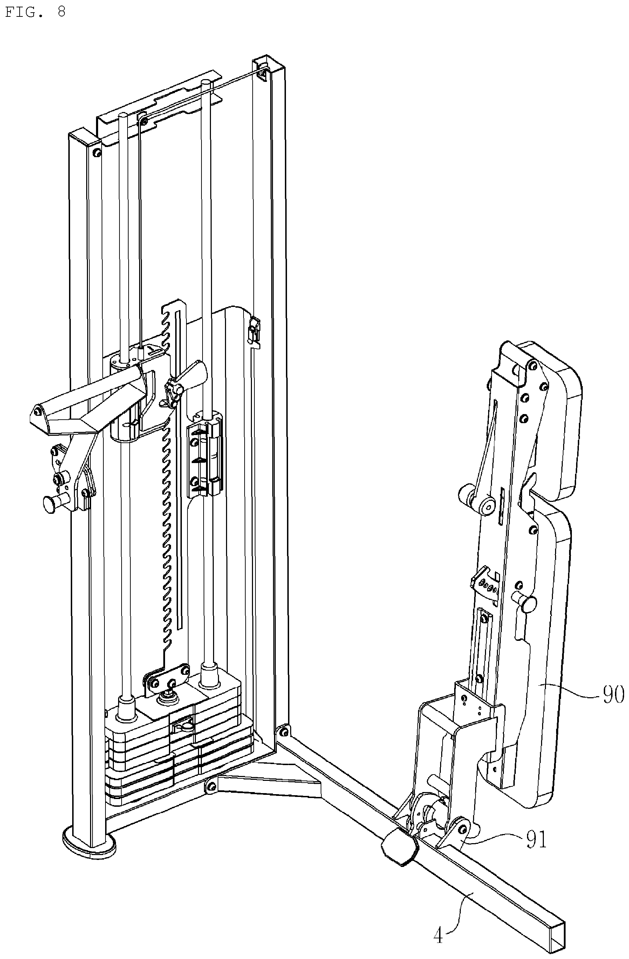

FIG. 8 is a perspective view showing exercise equipment for weight training according to another embodiment of the present disclosure.

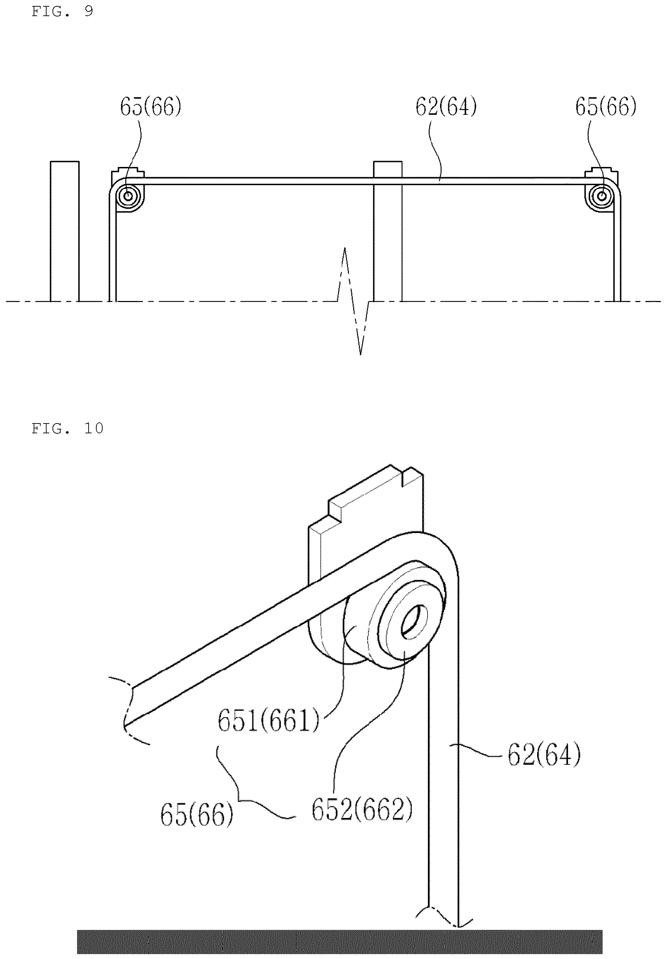

FIG. 9 is a configuration view showing a roller bearing of the exercise equipment for weight training according to the present disclosure.
FIG. 10 is a perspective view showing the roller bearing of the exercise equipment for weight training according to the present disclosure.

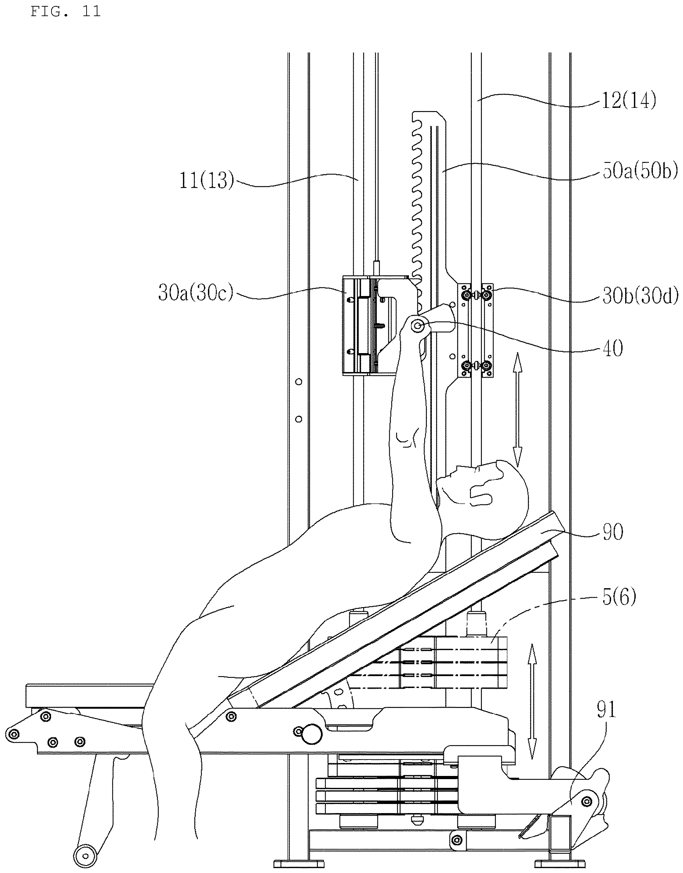

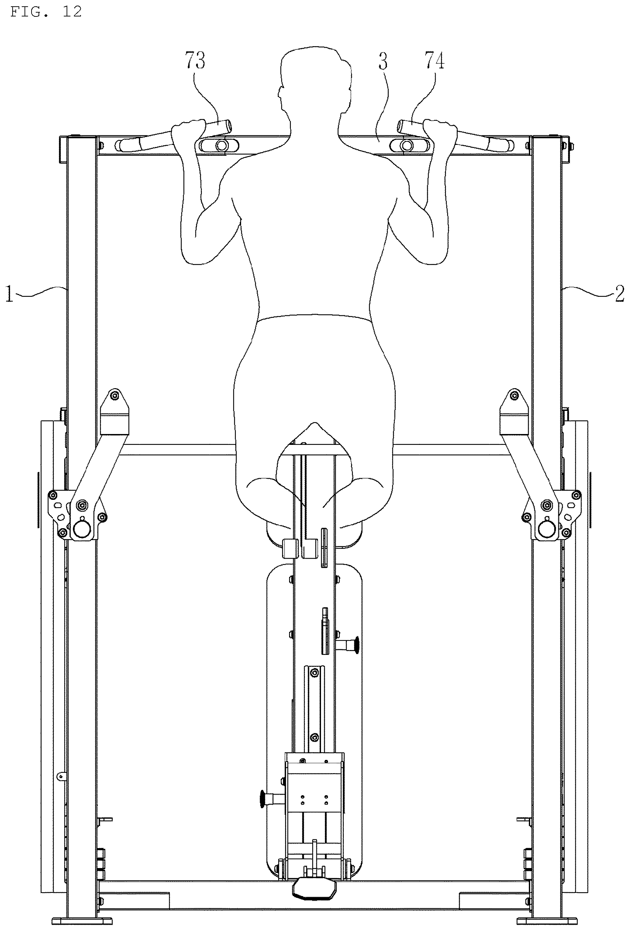

FIGS. 11 and 12 are conceptual diagrams illustrating exercise motions performed using the exercise equipment for weight training according to the present disclosure.

### Best Mode

As shown in the figures, the present disclosure is directed to exercise equipment for weight training including a first support frame 1 and a second support frame 2 positioned to face each other on oppositesides, an upper end connection frame 3 configured to connect upper ends of the first support frame 1 and the second support frame 2, a lower end connection frame 4 configured to connect lower ends of the first support frame 1 and the second support frame 2, a first weight 5 arranged at a lower portion of the first support frame 1, and a second weight 6 arranged at a lower portion of the second support frame 2.

The exercise equipment for weight training of the present disclosure includes a first guide rod 11 and a second guide rod 12 arranged in a vertical longitudinal direction of the first support frame 1 to penetrate oppositesides of an upper end of the first weight 5, upper and lower ends of the first guide rod 11 and the second guide rod 12 being fixed to upper and lower ends of the first support frame 1, respectively, and a third guide rod 13 and a fourth guide rod 14 arranged in a vertical longitudinal direction of the second support frame 2 to penetrate oppositesides of an upper end of the second weight 6, upper and lower ends of the third guide rod 13 and the fourth guide rod 14 being fixed to upper and lower ends of the second support frame 2, respectively.

The first guide rod 11 and the second guide rod 12 are arranged to penetrate the first weight 5, and the third guide rod 13 and the fourth guide rod 14 are arranged to penetrate the second weight 6. Accordingly, when the first weight 5 and the second weight 6 are moved up and down, the vertical movement of the first weight 5 and the first weight 5 is guided without causing interference.

The exercise equipment also includes a first bearing body 30a fitted onto the first guide rod 11 to slide up and down along the first guide rod 11, the first bearing body 30a having a first hinge groove 31, a second bearing body 30b fitted onto the second guide rod 12 to slide up and down along the second guide rod 12, a third bearing body 30c fitted onto the third guide rod 13 to slide up and down along the third guide rod 13, the third bearing body 30c having a second hinge groove 32, and a fourth bearing body 30d fitted onto the fourth guide rod 14 to slide up and down along the fourth guide rod 14.

The first bearing body 30a, the second bearing body 30b, the third bearing body 30c, and the fourth bearing body 30d are configured to move up and down along the first guide rod 11, the second guide rod 12, the third guide rod 13, and the fourth guide rod 14 when a first weight lifting member 50a and a second weight lifting member 50b move up and down. As the first weight body 30a, the second bearing body 30b, the third bearing body 30c, and the fourth bearing body 30d are moved up and down as described above, the load is evenly distributed when the first weight 5 and the second weight 6 are lifted. Thereby, lifting the first weight 5 and the second weight 6 is facilitated.

To this end, the first weight lifting member 50a of the present disclosure has a lower end fixed to the center of the upper end of the first weight 5 and includes a plurality of first catching grooves 51 arranged in the vertical longitudinal direction to face the first hinge groove 31 of the first bearing body 30a, and a first connection piece 52 connected to the second bearing body 30b.

The second weight lifting member 50b of the present disclosure has a lower end fixed to the center of the upper end of the second weight 6 and includes a plurality of second catching grooves 53 arranged in the vertical longitudinal direction to face the second hinge groove 32 of the third bearing body 30c, and a second connection piece 54 connected to the fourth bearing body 30d.

Since the lower end of the first weight lifting member 50a is fixed to the center of the upper end of the first weight 5, the first weight lifting member is moved up and down by the motion of lifting the first weight 5. At this time, the first bearing body 30a and the second bearing body 30b, which are connected to the first weight lifting member 50a, are also lifted. Thus, the load transmitted by the first weight 5 is evenly distributed.

In addition, since the lower end of the second weight lifting member 50b is fixed to the center of the upper end of the second weight 6, the second weight lifting member is moved up and down by the motion of lifting the second weight 6. At this time, the third bearing body 30c and the fourth bearing body 30d, which are connected to the second weight lifting member 50b, are also lifted. Thus, the load transmitted by the second weight 6 is evenly distributed. The equipment of the present disclosure includes a weight training rod 40 having one side connected to the first bearing body 30a by fitting a first hinge protrusion 41 of a first hinge fixing member 42 arranged on the one side into the first hinge groove 31 of the first bearing body 30a, and an opposite side connected to the second bearing body 30b by fitting a second hinge protrusion 43 of a second hinge fixing member 44 arranged on the opposite side into the second hinge groove 32 of the third bearing body 30c.

The upper body exercise may be performed using the weight training rod 40 configured as described above. While a user is seated, the weight training rod 40 is placed on the back of the user. Then, when the user stands up holding the weight training rod 40 by oppositehands, the weight training rod 40 is lifted. As the weight training rod 40 is lifted, the first weight lifting member 50a, into which the first hinge protrusion 41 of the first hinge fixing member 42 provided on one side of the weight lifting rod 40 is fitted, and the first bearing body 30a and the second bearing body 30b connected to the first weight lifting member 50a are elevated.

Of course, the first weight 5 whose upper end is connected to the lower end of the first weight lifting member 50a is also lifted.

As the weight training rod 40 is lifted, the second weight lifting member 50b, into which the second hinge protrusion 43 of the second hinge fixing member 44 provided on the opposite side of the weight training rod 40 is fitted, and the third bearing body 30c and the fourth bearing body 30d connected to the second weight lifting member 50b are also elevated. Accordingly, the second weight 6 whose upper end is connected to the lower end of the second weight lifting member 50b is also lifted.

As described above, the load applied when the first weight 5 and the second weight 6 are lifted by lifting the weight training rod 40 is evenly distributed by the first bearing body 30a, the second bearing body 30b, the third bearing body 30c, and the fourth bearing body 30d to minimize the load transmitted to the weight training rod 40. Accordingly, the pressure applied to the back of the neck of the user may be minimized.

In addition, the user may perform various weight training exercises by positioning the weight training rod 40 on the chest of the user and then holding and lifting the weight training rod 40 with oppositearms while seated on a bench 90 or by holding and lifting the weight training rod 40 with oppositearms while lying on the bench 90.

To this end, the lower end connection frame 4 of the present disclosure is provided with the bench 90, which is unfolded forward of the first support frame 1 and second support frame 2.

Here, the bench 90 is connected to the lower end connection frame 4 by a hinge portion 91, and is thus rotated about the hinge portion 91 to be unfolded forward of the first support frame 1 and the second support frame 2 or to be erected rearward of the first support frame 1 and the second support frame 2.

Accordingly, in performing weight training desired by the user, the user may perform various weight training programs by unfolding the bench 90 forward of the first support frame 1 and the second support frame 2 or erecting the same rearward of the first support frame 1 and the second support frame 2 about the hinge portion 91.

The equipment of the present disclosure incudes a first wire 62 having one side connected to the first bearing body 30a and an opposite side connected to a first counterweight 61, a second wire 64 having one side connected to the third bearing body 30c and an opposite side connected to a second counterweight 63, a first roller bearing 65 configured to guide the first wire 62, and a second roller bearings 66 configured to guide the second wire 64.

The first roller bearing 65 configured to guide the first wire 62 includes a first roller portion 651 configured to guide the first wire 62 in close contract therewith, and a first bearing portion 652 provided inside the first roller portion 651.

In addition, the second roller bearing 66 configured to guide the second wire 64 includes a second roller portion 661 configured to guide the second wire 64 in close contract therewith, and a second bearing portion 662 provided inside the second roller portion 661.

Since the first wire 62 and the second wire 64 are guided by the first roller bearing 65 having the first bearing portion 652 and the second roller bearing 66 having the second bearing portion 662, the first weight 5 and the second weight 6 may be lifted and lowered smoothly and easily without generating noise.

The equipment of the present disclosure includes a first auxiliary frame 71 configured to connect the first support frame 1 and the upper end connection frame 3, a second auxiliary frame 72 configured to connect the second support frame 2 and the upper end connection frame 3, a first chin-up exercise rod 73 having one side fixed to the first auxiliary frame 71, a second chin-up exercise rod 74 arranged to face the first chin-up exercise rod 73 and having one side fixed to the auxiliary frame 72, a third chin-up exercise rod 75 having one side fixed to the first auxiliary frame 71 and positioned close to the upper end connection frame 3, a fourth chin-up exercise rod 76 having one side fixed to the second auxiliary frame 72 and positioned close to the upper end connection frame 3 to face the third chin-up exercise rod 75, a first parallel exercise member 81 provided on the front surface of the first support frame 1, and a second parallel exercise member 82 provided on the front surface of the second support frame 2.

Since the first chin-up exercise rod 73, the second chin-up exercise rod 74, the third chin-up exercise rod 75, and the fourth chin-up exercise rod 76 are provided to the first auxiliary frame 71 and the second auxiliary frame 72 so as to correspond to each other as described above, the user may perform an exercise such as pull-up, holding the first chin-up exercise rod 73 and the second chin-up exercise rod 74 with oppositehands or holding the third chin-up exercise rod 75 and the fourth chin-up exercise rod 76 with oppositehands. The user may also perform a parallel bar exercise, holding the first parallel exercise member 81 and the second parallel exercise member 82 with oppositehands.

Since the exercise equipment for weight training according to the present disclosure can be used to perform various weight training motions, there is no need to separately provide exercise machines for individual exercise motions. Each of the first bearing body 30a, the second bearing body 30b, the third bearing body 30c and the fourth bearing body 30d of the present disclosure includes a first bearing accommodation body 310 having a first fastening part 311 arranged on one side, a first sliding portion 312 provided in the center of an inner side thereof in a longitudinal direction, first bearing accommodation portions 313 symmetrically arranged on oppositesides of an upper portion of the first sliding portion 312 to face each other, and second bearing accommodation portions 314 symmetrically arranged on oppositesides of a lower portion of the first sliding portion 312, a second bearing accommodation body 320 having a second fastening part 321 arranged on one side and corresponding to the first fastening part 311, a second sliding portion 322 provided in the center of an inner side thereof in the longitudinal direction, third bearing accommodation portions 323 symmetrically arranged on oppositesides of an upper portion of the second sliding portion 322 to face each other, and fourth bearing accommodation portions 324 symmetrically arranged on oppositesides of a lower portion of the second sliding portion 322, a plurality of first bearings 330 each having one side and an opposite side accommodated in the first bearing accommodation portions 313 and the third bearing accommodation portions 323, respectively, and a plurality of second bearings 340 each having one side and an opposite side accommodated in the second bearing accommodation portions 314 and the fourth bearing accommodation portions 324.

The plurality of first bearings 330 and the plurality of second bearings 340 are positioned to form a cross arrangement, and thus closely contact and support the first guide rod 11, onto which the first bearing body 30a is fitted, the second guide rod 12, onto which the second bearing body 30b is fitted, the third guide rod 13, onto which the third bearing body 30c is fitted, and the fourth guide rod, onto which the fourth bearing body 30d is fitted, in four directions at the same time. Accordingly, the load of the weight is distributed to the first bearing body 30a, the second bearing body 30b, the third bearing body 30c, and the fourth bearing body 30d so as to be evenly distributed. According to the present disclosure configured as described above, the first fastening part 311and the second fastening part 321 are fastened to each other in close contact with each other by fastening means such as bolts and nuts. Here, the second bearing body 30b and the fourth bearing body 30d connected to the first connection piece 52 of the first weight lifting member 50a and the second connection piece 54 of the second weight lifting member 50b are fixed by inserting the first connection piece 52 and the second connection piece 54 into the first fastening part 311 and the second fastening part 321, respectively, and fastening the first fastening part 311 and the second fastening part 321.

In the present disclosure, since the plurality of first bearings 330 and the plurality of second bearings 340 are arranged in a cross shape crossing each other, the plurality of first bearings 330 and the plurality of second bearings 340 may the positioned in a cross shape on the outer surface of each of the first guide rod 11, the second guide rod 12, the third guide rod 13, and the fourth guide rod 14 and support the outer surface in close contact therewith. Accordingly, the load transmitted by the first weight 5 and the second weight 6 may be easily evenly distributed, and may be prevented from being concentrated at any one of the plurality of first bearings 330 and the plurality of second bearings 340.

In the present disclosure, the first bearing accommodation portions 313 are positioned on oppositesides of the first sliding portion 312, and one side of each of the plurality of first bearings 330 is accommodated therein. The first bearing accommodation portions are formed in a semicircular shape and provided on the inside thereof with a first shaft fitting portion 3131 into which one side of each of the plurality of first bearings 330 is fitted. The third bearing accommodation portions 323 are positioned on oppositesides of the second sliding portion 322 to face the first bearing accommodation portions 313, and the opposite side of each of the plurality of first bearings 330 is accommodated therein. The third bearing accommodation portions are formed in a semicircular shape and provided on the inside thereof with a second shaft fitting portion 3231 into which the opposite side of each of the plurality of first bearings 330 is fitted.

In addition, the second bearing accommodation portions 314 are positioned on oppositesides of the first sliding portion 312, and one side of each of the plurality of second bearings 340 is accommodated therein. The second bearing accommodation portions are formed in a semicircular shape and provided on the inside thereof with a third shaft fitting portion 3141 into which one side of each of the plurality of second bearings 340 is fitted. The fourth bearing accommodation portion 324 are positioned on oppositesides of the second sliding portion 322 to face the second bearing accommodation portions 313, and the opposite side of each of the plurality of second bearings 340 is accommodated therein. The fourth bearing accommodation portions are formed in a semicircular shape and provided on the inside thereof with a fourth shaft fitting portion 3241 into which the opposite side of each of the plurality of second bearings 340 is fitted.

In the present disclosure as described above, after the one side and the opposite side are respectively inserted into the first bearing accommodation portions 313 and the third bearing accommodation portions 323, the first bearings 330 axially connected to the first shaft fitting portion 3131 and the second shaft fitting portion 3231 maintain an angle of 90 degrees with respect to each other.

In addition, after the one side and the opposite side are respectively inserted into the second bearing accommodation portions 314 and the fourth bearing accommodation portions 324, the second bearings 340 axially connected to the third shaft fitting portion 3141 and the fourth shaft fitting portion 3241 maintain an angle of 90 degrees with respect to each other.

Accordingly, when the first weight 5 and the second weight 6 are lifted, the first bearing body 30a, the second bearing body 30b, and the third bearing body 30c, and the fourth bearing body 30d may firmly and closely contact and support the outer surfaces of the first guide rod 11, the second guide rod 12, the third guide rod 13, and the fourth guide rod 14. In addition, when the first weight 5 and the second weight 6 are lifted, the load may be evenly distributed to minimize the load transmitted to the user, and lifting of the first weight 5 and the second weight 6 may be facilitated.

### Industrial Applicability

According to the present disclosure, various weight training exercises may be performed using a weight training rod, a chin-up exercise rod, and a parallel exercise member. In addition, as a first bearing body, a second bearing body, a third bearing body and a fourth bearing body are respectively fitted onto a first guide rod, a second guide rod, a third guide rod, and a fourth guide rod, the first bearing body, the second bearing body, the third bearing body, and the fourth bearing body slide up and down along the first guide rod, the second guide rod, the third guide rod, and the fourth guide rod according to the motion of lifting a weight. Further, since a plurality of first bearings and a plurality of second bearings provided in each of the first bearing body, the second bearing body, the third bearing body, and the fourth bearing body are positioned in a cross shape, they may closely contact and support the outer surfaces of the first guide rod and the second guide rod, the third guide rod, and the fourth guide rod at the same time, and thus the lifted weight is evenly distributed.

## Claims

1. Exercise equipment for weight training comprising:
a first support frame (1) and a second support frame (2) positioned on opposite sides to face each other;
an upper end connection frame (3) configured to connect upper ends of the first support frame (1) and the second support frame (2);
a lower end connection frame (4) configured to connect lower ends of the first support frame (1) and the second support frame (2);
a first weight (5) arranged at a lower portion of the first support frame (1);
a second weight (6) arranged at a lower portion of the second support frame (2);
a first guide rod (11) and a second guide rod (12) arranged in a vertical longitudinal direction of the first support frame (1) to penetrate oppositesides of an upper end of the first weight (5), upper and lower ends of the first guide rod (11) and the second guide rod (12) being fixed to upper and lower ends of the first support frame (1), respectively;
a third guide rod (13) and a fourth guide rod (14) arranged in a vertical longitudinal direction of the second support frame (2) to penetrate oppositesides of an upper end of the second weight (6), upper and lower ends of the third guide rod (13) and the fourth guide rod (14) being fixed to upper and lower ends of the second support frame (2), respectively;
a first bearing body (30a) fitted onto the first guide rod (11) to slide up and down along the first guide rod (11), the first bearing body (30a) having a first hinge groove (31);
a second bearing body (30b) fitted onto the second guide rod (12) to slide up and down along the second guide rod (12);
a third bearing body (30c) fitted onto the third guide rod (13) to slide up and down along the third guide rod (13), the third bearing body (30c) having a second hinge groove (32);
a fourth bearing body (30d) fitted onto the fourth guide rod (14) to slide up and down along the fourth guide rod (14);
a weight training rod (40) having one side connected to the first bearing body (30a) by fitting a first hinge protrusion (41) of a first hinge fixing member (42) arranged on the one side into the first hinge groove (31) of the first bearing body (30a), and an opposite side connected to the second bearing body (30b) by fitting a second hinge protrusion (43) of a second hinge fixing member (44) arranged on the opposite side into the second hinge groove (32) of the third bearing body (30c);
a first weight lifting member (50a) having a lower end fixed to a center of the upper end of the first weight (5) and including a plurality of first catching grooves (51) arranged in a vertical longitudinal direction to face the first hinge groove (31) of the first bearing body (30a), and a first connection piece (52) connected to the second bearing body (30b);
a second weight lifting member (50b) having a lower end fixed to a center of the upper end of the second weight (6) and including a plurality of first catching grooves (53) arranged in the vertical longitudinal direction to face the second hinge groove (32) of the third bearing body (30c), and a second connection piece (54) connected to the fourth bearing body (30d);
a first wire (62) having one side connected to the first bearing body (30a) and an opposite side connected to a first counterweight (61);
a second wire (64) having one side connected to the third bearing body (30c) and an opposite side connected to a second counterweight (63);
a first roller bearing (65) configured to guide the first wire (62);
a second roller bearing (66) configured to guide the second wire (64);
a first auxiliary frame (71) configured to connect the first support frame (1) and the upper end connection frame (3) ;
a second auxiliary frame (72) configured to connect the second support frame (2) and the upper end connection frame (3);
a first chin-up exercise rod (73) having one side fixed to the first auxiliary frame (71);
a second chin-up exercise rod (74) arranged to face the first chin-up exercise rod (73) and having one side fixed to the auxiliary frame (72);
a third chin-up exercise rod (75) having one side fixed to the first auxiliary frame (71) and positioned close to the upper end connection frame (3);
a fourth chin-up exercise rod (76) having one side fixed to the second auxiliary frame (72) and positioned close to the upper end connection frame (3) to face the third chin-up exercise rod (75);
a first parallel exercise member (81) provided on a front surface of the first support frame (1); and
a second parallel exercise member (82) provided on a front surface of the second support frame (2),
wherein each of the first bearing body (30a), the second bearing body (30b), the third bearing body (30c) and the fourth bearing body (30d) comprises:
a first bearing accommodation body (310) having a first fastening part (311) arranged on one side, a first sliding portion (312) provided in the center of an inner side thereof in a longitudinal direction, first bearing accommodation portions (313) symmetrically arranged on oppositesides of an upper portion of the first sliding portion (312) to face each other, and second bearing accommodation portions (314) symmetrically arranged on oppositesides of a lower portion of the first sliding portion (312);
a second bearing accommodation body (320) having a second fastening part (321) arranged on one side and corresponding to the first fastening part (311), a second sliding portion (322) provided in the center of an inner side thereof in the longitudinal direction, third bearing accommodation portions (323) symmetrically arranged on oppositesides of an upper portion of the second sliding portion (322) to face each other, and fourth bearing accommodation portions (324) symmetrically arranged on oppositesides of a lower portion of the second sliding portion (322);
a plurality of first bearings (330) each having one side and an opposite side accommodated in the first bearing accommodation portions (313) and the third bearing accommodation portions (323), respectively; and
a plurality of second bearings (340) each having one side and an opposite side accommodated in the second bearing accommodation portions (314) and the fourth bearing accommodation portions (324),
wherein the plurality of first bearings (330) and the plurality of second bearings (340) are positioned in a cross shape to closely contact and support the first guide rod (11) fitted into the first bearing body (30a), the second guide rod (12) fitted into the second bearing body (30b), the third guide rod (13) fitted into the third bearing body (30c), and the fourth guide rod fitted into the fourth bearing body (30d), in four directions at the upper and lower portions at the same time, such that a load of a weight is evenly distributed to the first bearing body (30a), the second bearing body (30b), the third bearing body (30c), and the third bearing body (30d).

2. The exercise equipment of claim 1, wherein the first bearing accommodation portions (313) are positioned on oppositesides of the first sliding portion (312), and one side of each of the plurality of first bearings (330) is accommodated therein, wherein the first bearing accommodation portions (313) are formed in a semicircular shape and provided on an inside thereof with a first shaft fitting portion (3131) fitted onto one side of each of the plurality of first bearings (330),
wherein the third bearing accommodation portions (323) are positioned on oppositesides of the second sliding portion (322) to face the first bearing accommodation portions (313), and the opposite side of each of the plurality of first bearings (330) is accommodated therein, wherein the third bearing accommodation portions are formed in a semicircular shape and provided on an inside thereof with a second shaft fitting portion (3231) fitted onto the opposite side of each of the plurality of first bearings (330).
wherein the second bearing accommodation portions (314) are positioned on oppositesides of the first sliding portion (312), and one side of each of the plurality of second bearings (340) is accommodated therein, wherein the second bearing accommodation portions are formed in a semicircular shape and provided on an inside thereof with a third shaft fitting portion (3141) fitted onto one side of each of the plurality of second bearings (340), and
wherein the fourth bearing accommodation portion (324) are positioned on oppositesides of the second sliding portion (322) to face the second bearing accommodation portions (313), and the opposite side of each of the plurality of second bearings (340) is accommodated therein, wherein the fourth bearing accommodation portions are formed in a semicircular shape and provided on an inside thereof with a fourth shaft fitting portion (3241) fitted onto the opposite side of each of the plurality of second bearings (340) .

3. The exercise equipment of claim 1, wherein the first roller bearing (65) configured to guide the first wire (62) comprises:
a first roller portion (651) configured to guide the first wire (62) in close contact therewith; and
a first bearing portion (652) provided inside the first roller portion (651),
wherein the second roller bearing (66) configured to guide the second wire (64) comprises:
a second roller portion (661) configured to guide the second wire (64) in close contact therewith; and
a second bearing portion (662) provided inside the second roller portion (661).
